(19) Europäisches Patentamt
European Patent Office
Office européen des brevets

(11) Veröffentlichungsnummer: **0 078 006**
**B1**

(12) # EUROPÄISCHE PATENTSCHRIFT

(45) Veröffentlichungstag der Patentschrift: **05.02.86**

(51) Int. Cl.⁴: **C 09 B 67/22**, C 09 B 29/085, D 06 P 3/54

(21) Anmeldenummer: **82109672.4**

(22) Anmeldetag: **20.10.82**

(54) **Marineblaue Dispersionsfarbstoffmischungen.**

(30) Priorität: **28.10.81 DE 3142609**

(43) Veröffentlichungstag der Anmeldung:
**04.05.83 Patentblatt 83/18**

(45) Bekanntmachung des Hinweises auf die Patenterteilung:
**05.02.86 Patentblatt 86/6**

(84) Benannte Vertragsstaaten:
**CH DE FR GB IT LI**

(56) Entgegenhaltungen:
**EP - A - 0 034 715**
**FR - A - 2 388 861**

**CHEMICAL ABSTRACTS, Band 94, Nr. 13, Juni 1981, Seite 79, Nr. 210234w, Columbus, Ohio, USA**

***Die Akte enthält technische Angaben, die nach dem Eingang der Anmeldung eingereicht wurden und die nicht in dieser Patentschrift enthalten sind.***

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Degen, Helmut, Wildstrasse 32, D-6710 Frankenthal (DE)**
Erfinder: **Hansen, Guenter, Dr., Alwin-Mittasch-Platz 8, D-6700 Ludwigshafen (DE)**
Erfinder: **Krallmann, Reinhold, Bachweg 2, D-6719 Weisenheim (DE)**
Erfinder: **Kermer, Wolf-Dieter, Dr., Im Schlittweg 4, D-6701 Fussgoenheim (DE)**

EP 0 078 006 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindur. betrifft marineblaue Mischungem, die drei Farbstoffe der Formel I

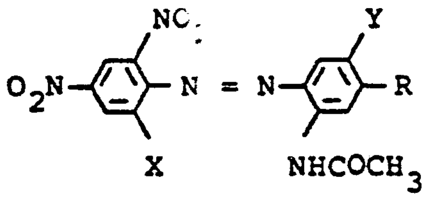

I

enthalten, in der

X Chlor oder Brom,

Y Wasserstoff, Methoxy oder Ethoxy und

R $N(C_2H_5)_2$, $N(CH_2CH=CH_2)_2$ oder $H(C_2H_4OCOCH_3)_2$ sind, wobei Farbstoffe mit Y = H und R = $N(O_2H_5)_2$ zu 10 bis 70 %, Farbstoffe mit Y = $OCH_3$ oder $OC_2H_5$ und R = $H(OH_2$-$OH=OH_2)_2$ zu 5 bis CO % und farbstoffe mit Y = $OOH_3$ oder $OC_2H_5$ und R = $N(O_2H_cOOOCH_3)_2$ zu 5 bis 80 % vorliegen.

X kann dabei sowohl Chlor als auch Brom sein Brom ist jedoch hevorzugt.

Insbesondere betrifft die Erfindung Mischungen, bei denen die Farbstoffe im der angegebenen Reihenfolge im Verhältnis 15 bis 55 % zu 7 bis 30 % zu 25 bis 75 % vorliegen.

Die erfin dungsgemäßen Verbindungen zeichnen sich durch vorzügliche färherische Eigenschaften aus und ergeben auf synthetiechen Polyestern marineblaue Färbungen mit neutraler Abendfarbe und guten bie sehr guten Echtheiten. Die Herstellung erfolgt zweckmäßigerweise durch Mischen der Einzelkomponenten. Aus C.A. 94, Nr. 210234 w (1981) sowie den Veröffentlichungen FR-A-2 388 861 und EP-A-0 034 715 sind schon marineblaue Farbstoffmischungen bekannt; diesen Mischungen gegenuber zeichnen sich die erfindungsgemäßen Mischungen durch ein insgesamt gesehen hÖheres Echtheitsniveau aus.

In den folgenden Beispielen beziehen sich Angaben über Teile und Prozente auf das Gewicht.

**Beispiel 1**

Marineblaue und violette Farbstoffe, die der allgemeinen Formel I

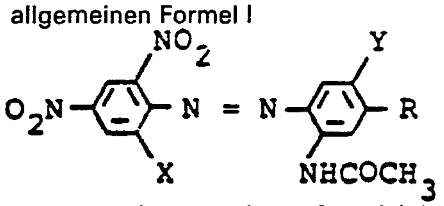

I

entsprechen, werden auf an sich bekannte Weise hergestellt und durch mechanisches Mischen zu den erfindungsgemäßen Farbstoffgemischen vereinigt.

9 Teile des Farbstoffs mit X = Brom, Y = Methoxy, R = $N(CH_2$-$CH=CH_2)_2$,

16 Teile des Farbstoffs mit X = Brom, Y = Wasserstoff, R = $N(C_2H_5)_2$ und

75 Teile des Farbstoffs mit X = Brom, Y = Methoxy und R = $N(C_2H_4OCOCH_3)_2$

werden in einer Kugelmühle vermischt und ergeben 100 Teile einer erfindungsgemäßen Farbstoffmischung.

Auf synthetischem Polyester ergibt die Mischung farbstarke marineblaue Färbungen mit guten Echtheiten.

**Beispiel 2**

17,5 Teile des Farbstoffs mit X = Brom, Y = Ethoxy, R = $N(CH_2$-$CH=CH_2)_2$,

32,5 Teile des Farbstoffs mit X = Brom, Y = Wasserstoff, R = $N(C_2H_5)_2$ und

50 Teile des Farbstoffs mit X = Brom, Y = Ethoxy und R = $N(C_2H_4OCOCH_3)_2$

werden in einer Kugelmühle zu 100 Teilen einer erfindungsgemäßen Farbstoffmischung vermischt.

Die Mischung ergibt auf synthetischem Polyester farbstarke marineblaue Färbungen mit guten Echtheiten.

**Beispiel 3**

In einer Kugelmühle werden

25 Teile des Farbstoffs mit X = Chlor, Y = Methoxy, R = $N(CH_2$-$CH=CH_2)_2$,

50 Teile des Farbstoffs mit X = Brom, Y = Wasserstoff, R = $N(C_2H_5)_2$ und

25 Teile des Farbstoffs mit X = Brom, Y = Methoxy, R = $N(C_2H_4OCOCH_3)_2$

zu 100 Teilen einer erfindungsgemäßen Farbstoffmischung vermischt.

Auf Polyester liefert die Mischung farbstarke marineblaue Färbungen mit ausgezeichneten Echtheiten.

**Beispiel 4** (HT-Verfahren)

100 Teile eines Polyestergarns werden in einem Färbebad, das 1500 Teile Wasser, 1,8 Teile der in Beispiel 1 hergestellten, feinverteilten Farbstoffmischung und 1,8 Teile eines durch Anlagerung von 50 Mol Ethylenoxid an 1 Mol Spermölalkohol und anschließendes Sulfonieren erhaltenen Produktes enthält, behandelt. Man beginnt bei 60 °C erhöht die Temperatur in 20 Minuten auf 125 °C und färbt noch weitere 90 Minuten bei dieser Temperatur.

Man erhält eine tiefe Marineblaufärbung mit sehr guten Echtheitseigenschaften.

**Beispiel 5** (Thermosolverfahren)

Ein Polyestergewebe wird auf einem Dreiwalzenfoulard mit einer Färbeflotte getränkt, die in 1000 Teilen 48 Teile der in Beispiel 3

hergestellten, feinverteilten Farbstoffmischung, 12 Teile einer 20 %igen wäßrigen Lösung des Copolymeren aus Acrylsäure und Acrylamid und 940 Teile Wasser enthält.

Nach dem Imprägnieren unter 60 % Flottenaufnahme wird das Gewebe bei 120 °C zwischengetrocknet und während 60 Sekunden bei 210 °C thermosoliert.

Man erhält eine tiefe, marineblaue Färbung mit hervorragenden Echtheitseigenschaften.

**Beispiel 6**

Ein Polyestergewebe wird mit einer Paste bedruckt, die in 1000 Teilen 60 Teile der in Beispiel 2 hergestellten, feinverteilten Farbstoffmischung, 20 Teile des Umsetzungsproduktes aus 1 Mol Rizinusöl mit 40 Mol Ethylenoxid, 600 Teile einer Kristallgummiverdickung, 10 Teile Triisobutylphosphat und 310 Teile Wasser enthält. Nach dem Trocknen dämpft man das bedruckte Gewebe während 15 Minuten bei 1,52 bar Überdruck (1,5 atü).

Der erhaltene tiefe, marineblaue Druck weist ausgezeichnete Echtheitseigenschaften auf.

**Patentansprüche**

1. Marineblaue Dispersionsfarbstoffmischungen, die drei Farbstoffe der Formel

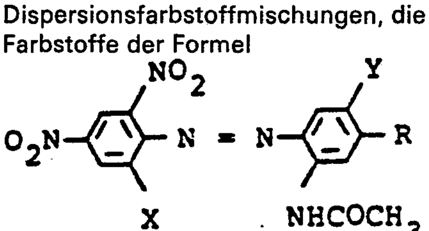

I

enthalten, in der

X Chlor oder Brom,

Y Wasserstoff, Methoxy oder Ethoxy und

R $N(C_2H_5)_2$, $N(CH_2CH=CH_2)_2$ oder $N(C_2H_4OCOCH_3)_2$ sind, wobei Farbstoffe mit Y = H und R = $N(C_2H_5)_2$ zu 10 bis 70 %, Farbstoffe mit Y = $OCH_3$ oder $OC_2H_5$ und R = $N(CH_2$-$CH=CH_2)_2$ zu 5 bis 40 % und Farbstoffe mit Y = $OCH_3$ oder $OC_2H_5$ und R = $N(C_2H_4OCOCH_3)_2$ zu 5 bis 80 % vorliegen.

2. Mischungen gemäß Anspruch 1 mit Farbstoffen bei denen X Chlor ist.

3. Verwendung der Mischungen gemäß Anspruch 1 zum Färben synthetischer Polyester.

**Claims**

1. A navy disperse dye mixture which contains three dyes of the formula

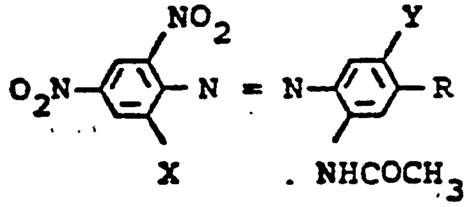

I

where

X is chlorine oder bromine,

Y is hydrogen, methoxy or ethoxy and

R is $N(C_2H_5)_2$, $N(CH_2CH=CH_2)_2$ or $N(C_2H_4OCOCH\ i3)_2$, the mixtures being composed of 10 - 70% of dyes where Y = H and R = $N(C_2H_5)_2$, 5 - 40% of dyes where Y = $OCH_3$ or $OC_2H_5$ and R = $N(CH_2$-$CH=CH_2)_2$ and $_5$ - 80% of dyes where Y = $OCH_3$ or $OC_2H_5$ and R = $N(C_2H_4OCOCH_3)_2$.

2. A mixture, as claimed in claim 1, containing dyes where X is chlorine.

3. The use of a mixture as claimed in claim 1 for dyeing synthetic polyesters.

**Revendications**

1. Mélanges bleu marine de colorants de dispersion qui contiennent trois colorants de formule

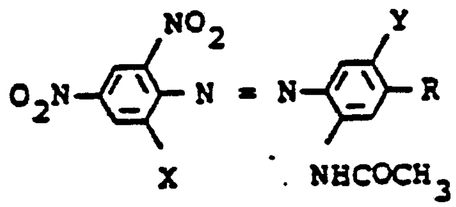

I

dans laquelle

X est un atome de chlore ou de brome,

Y est un atome d'hydrogène, un groupe méthoxy ou éthoxy et

R est un groupement $N(C_2H_5)_2$, $N(CH_2CH=CH_2)_2$ ou $N(C_2H_4OCOCH_3)_2$ le colorant avec Y = H et R = $N(C_2H_5)_2$ étant présent à raison de 10 à 70 %, le colorant avec Y = $OCH_3$ ou $OC_2H_5$ et R = $N(CH_2$-$CH=CH_2)_2$ à raison de 5 à 40 % et le colorant avec de 5 à 80 %.

2. Mélanges selon la revendication 1, contenant des colorants dans lesquels X est un atome de chlore.

3. Utilisation des mélanges selon la revendication 1 pour la teinture de polyesters synthétiques.